# EUROPEAN PATENT SPECIFICATION

(11) **EP 2 826 649 B1**
(45) Date of publication and mention of the grant of the patent: **27.04.2016**
(21) Application number: 13176604.0
(22) Date of filing: 16.07.2013
(51) Int. Cl.: B60J 7/00

(54) **Roof construction for a vehicle and method for manufacturing it**
Dachkonstruktion für ein Fahrzeug und Verfahren zu deren Herstellung
Structure de toit pour un véhicule et procédé pour sa fabrication

(43) Date of publication of application: 21.01.2015
(73) Proprietor: Inalfa Roof Systems Group B.V., 5804 AB Venray (NL)
(72) Inventor: Van Appeven, Frank, 6005 RV Tungelrooy-Weert (NL); Schrans, Harry, 5951 DJ Belfeld (NL)
(74) Representative: De Vries & Metman

(56) References cited:
- EP-A1- 2 189 313
- FR-A1- 2 937 910
- US-A1- 2008 060 275
- US-A1- 2013 049 409

## Description

The invention firstly relates to a roof construction for a vehicle, comprising a roof opening surrounded by a stationary roof part, a glass panel covering said roof opening and having a circumferential edge which is connected to the stationary roof part through at least one glass panel glue bead, and further comprising a rollo assembly which is attached to the glass panel through at least one rollo glue bead. A roof construction of this type is known from US 2013/0049409 A1.

In a known roof construction of such a type the glass panel comprises laminated glass. In a crash situation the glass panel may fracture, but because of its laminated nature the integrity of the panel will be maintained (meaning that the glass panel will not fall apart into small distinct pieces). As a result the rollo assembly will remain supported by the glass panel and will not fall down into the passenger compartment of the vehicle (with the risk of injuring occupants).

Recently there is a demand for using a glass panel manufactured from single layered tempered glass. Such a glass panel, however, is prone to loosing its integrity in a crash situation with the risk of the rollo assembly falling down.

In view of the above it is an object of the present invention to provide an improved roof construction of the above type.

In accordance with the present invention the glass panel glue bead and the rollo glue bead are interconnected through at least one connecting glue bead which adheres to the glass panel.

In the event of a crash situation in which the glass panel (completely or partly) disintegrates into small distinct pieces, such a connecting glue bead maintains a connection between the rollo assembly and the stationary roof part, such that the rollo assembly will not fall down (or at least will be slowed down dramatically while falling down).

In an embodiment of the roof construction in which the rollo assembly comprises two spaced rollo screen guides each attached to the glass panel through a rollo glue bead, it is conceivable that each of said rollo glue beads is connected to the glass panel glue bead through at least one connecting glue bead.

In such an embodiment it then is possible, for example, that each of said rollo glue beads is connected to the glass panel glue bead through two connecting glue beads, wherein, according to a further embodiment, the connections between a rollo glue bead and the corresponding two connecting glue beads may be located near to the opposite longitudinal outer ends of a respective guide. As a result the stabilisation of the position of the rollo assembly in the event of a crash situation may be optimised further.

In an embodiment of the roof construction according to which the roof opening defines two side edges extending in the longitudinal direction of the vehicle, each connecting glue bead may connect to a part of the glass glue bead positioned at such a side edge. Most commonly this will mean that the connecting glue beads extend in a transverse direction.

For further improving the strength of the connection between the rollo assembly and the stationary roof, it is conceivable that a rollo glue bead and a connecting glue bead connected thereto define a single, uniform glue bead manufactured integrally, whereas the glass glue bead and a connecting glue bead are separate glue beads manufactured separately and joined thereafter. Although it would be best, with respect to the strength of such a connection, to also manufacture the connecting glue bead and the glass glue bead as a single uniform glue bead, this in practice generally will not be possible because in most cases at a first location (for example a roof construction production facility) a glass panel is manufactured supporting the rollo assembly, where after this assembly will be connected to a stationary roof part at a different location (for example a vehicle assembling facility) using the glass panel glue bead.

Preferably the stationary roof part and the circumferential edge of the glass panel overlap each other in an overlapping zone and the connecting glue bead extends into said overlapping zone. This further improves the strength of the resulting connection between the rollo assembly and the stationary roof part, especially in case of a fracture of the glass panel.

The invention secondly relates to a method for manufacturing a roof construction for a vehicle of the type comprising a roof opening surrounded by a stationary roof part, a glass panel covering said roof opening and having a circumferential edge connected to the stationary roof part through at least one glass panel glue bead, and a rollo assembly which is attached to the glass panel through at least one rollo glue bead.

In accordance with the present invention said method comprises the steps of applying a glue bead to the glass panel at the intended position of the rollo glue bead, which glue bead is integrally continued to the intended position of the glass glue bead, followed by the step of attaching the rollo assembly to the glass panel by bringing it into contact with a part of said glue bead which than acts as rollo glue bead, next a step of curing the glue bead and the final step of applying the glass glue bead and connecting the circumferential edge of the glass panel with the stationary roof part through said glass glue bead, such that at the end of the final step the glass glue bead and the glue bead are interconnected.

It is possible that the final step comprises applying the glass glue bead to the stationary roof part, followed by bringing the glass panel and the glue bead thereon into contact with the glass glue bead. As an alternative, however, the final step may comprise applying the glass glue bead to the glass panel and into contact with the glue bead, followed by bringing the glass glue bead into contact with the stationary roof part. Which one of these alternatives will be used, may depend from the circumstances in the respective case.

When the method will be used for manufacturing a roof construction in which the stationary roof part and the circumferential edge of the glass panel overlap each other in an overlapping zone and wherein the glue bead extends into the overlapping zone, it is preferred that before starting the final step the height of the part of the glue bead intended to extend into the overlapping zone, is reduced. If such a reduction of the height of said part of the glue bead would not be carried out, there is a substantial risk that the glue bead at the overlapping zone is too thick and that it is not possible to position the glass panel correctly (i.e. at the right distance) relative to the stationary roof part, or that obtaining a correct position of the glass panel with respect to the stationary roof part involves the use of large forces, leading to unfavourable stresses in the finished roof construction.

The reduction of the height of said part of the glue bead may be carried out in many different ways. For example, the height of said glue bead part may be reduced previous to curing the glue bead by deformation of the glue bead. Such a deformation may be carried out by flattening and spreading out the glue bead by mechanical means, such as by a pressing member or a scraping member.

When a pressing member will be used, it might be favourable to position a thin strip between the pressing member and the glue bead, avoiding that the glue bead sticks to the pressing member. Such a thin strip can be made of, for example, foil, paper, metal or plastic material.

A scraping member may be a separate tool, but also may be part of a nozzle with which the glue bead is applied and may be brought into and out of contact with the glue bead by an appropriate manipulation of the nozzle (for example tilting thereof).

As further, non limiting, alternatives to reduce the height of the glue bead previous to curing, the increase of the speed with which such a nozzle moves, or a reduction of the speed with which glue is supplied to such a nozzle, may be mentioned.

It is conceivable too, that the height of said glue bead part is reduced after at least partially curing the glue bead, by removal of part of the glue bead. As an " example of such a step, the removal of part of the glue bead is carried out by a cutting member. It may be required to protect the cutting surface of the glue bead against dirt by applying a static foil or alike.

Hereinafter the invention will be elucidated while referring to the drawings, in which:
Figure 1 schematically illustrates a top plan view of a roof construction according to the state of the art;
Figure 2 shows a cross section according to II-II in figure 1;
Figure 3 schematically illustrates a top plan view of a roof construction according to the present invention;
Figure 4 shows a cross section according to IV-IV in figure 3, and
Figure 5 schematically illustrates four consecutive steps of a method for manufacturing an open roof construction according to the invention.

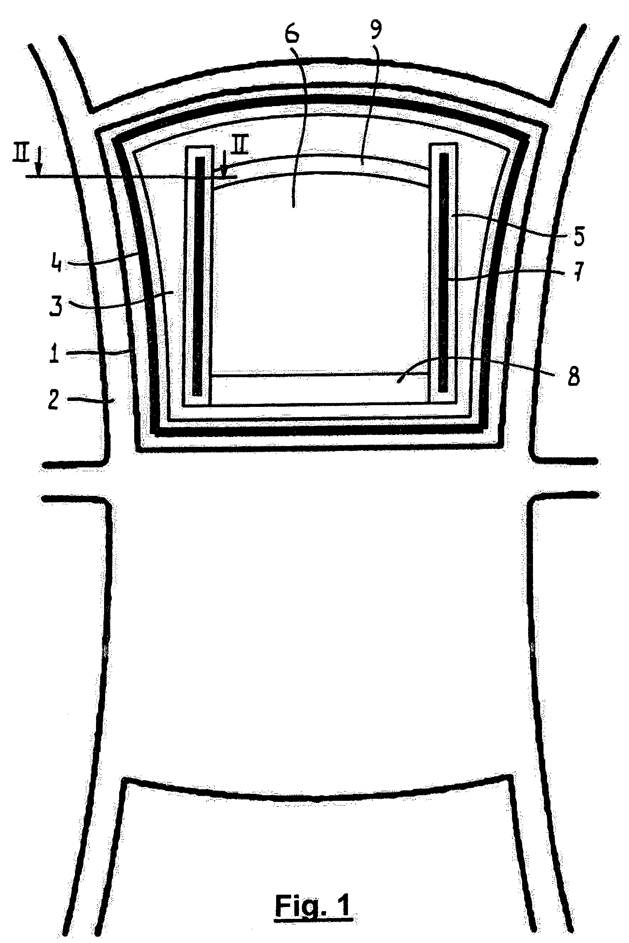

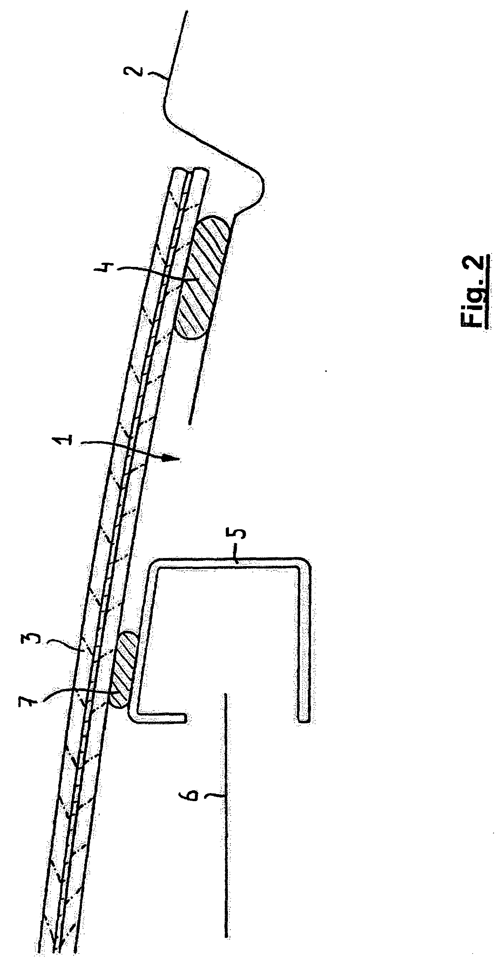

Firstly referring to figures 1 and 2, a state of the art open roof construction for a vehicle is illustrated in a schematic manner. It comprises a roof opening 1 surrounded by a stationary roof part 2, a glass panel 3 (made of laminated glass) covering said roof opening and having a circumferential edge which is connected to the stationary roof part 2 through a glass panel glue bead 4 extending, in the illustrated embodiment, along the entire circumferential edge of the glass panel 3.

Further a rollo assembly is shown of which two spaced guides 5 for guiding a rollo screen 6 are attached to the glass panel 3 through two rollo glue beads 7. As illustrated and as known generally, such a rollo assembly further may comprise a rollo shaft 8 for winding and unwinding the rollo screen 6 and a pull beam 9 attached to the rollo screen 6.

The laminated glass panel 3 will maintain its integrity in case of a crash situation (meaning that it will not break up into small pieces). As a result, the rollo assembly 5,6,8,9 will not fall down into the vehicle (causing the risk of injuring occupants of the vehicle).

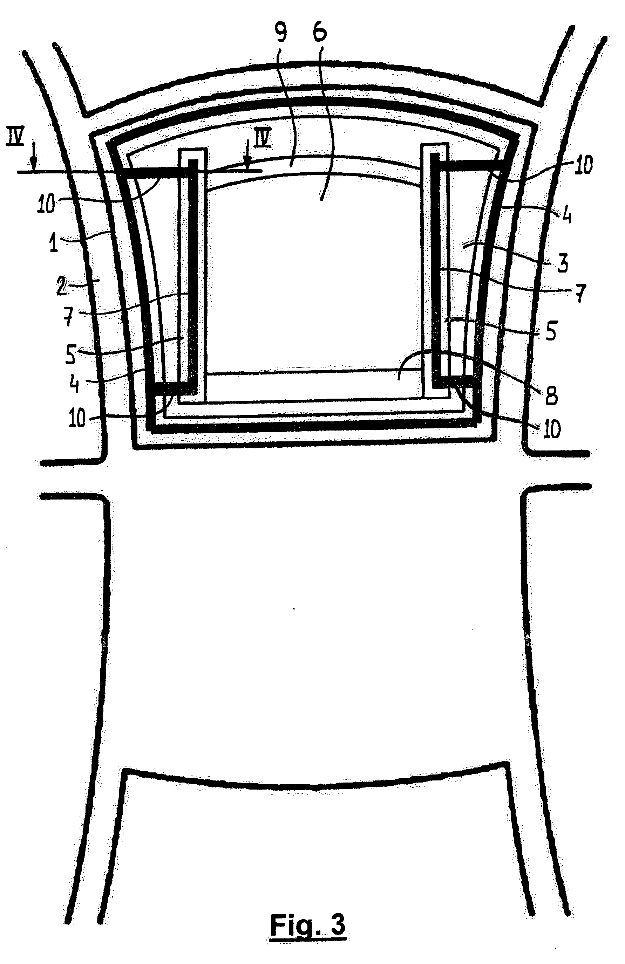

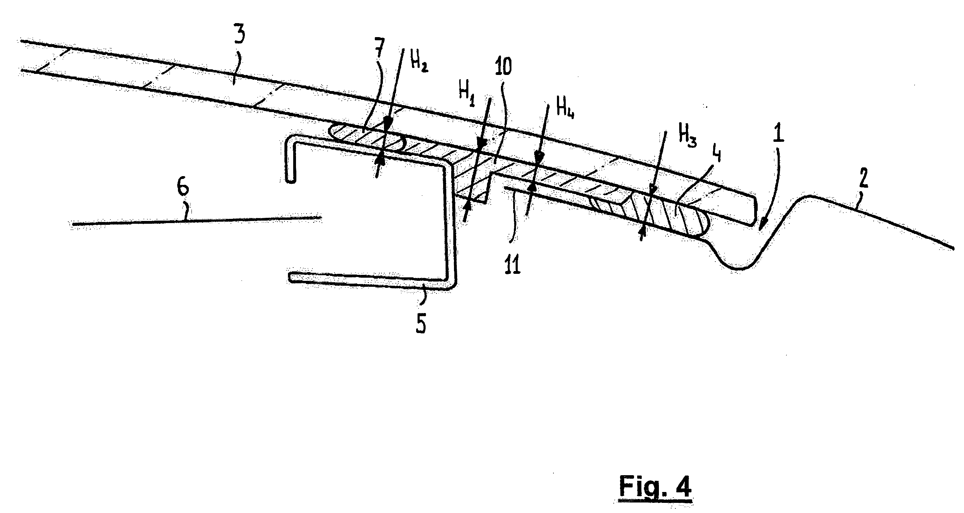

However, this situation will change if the glass panel 3 is not made of laminated glass but, for example, comprises a single layered tempered glass panel (as illustrated in figure 4). For still achieving that the rollo assembly will be prevented from falling down in a crash situation and will remain attached to and supported by the stationary roof part 2, figures 3 and 4 illustrate an embodiment of the roof construction in accordance with the present invention. Parts similar to corresponding parts in figures 1 and 2 have similar reference numbers and will not again be described here. As illustrated clearly, the glass panel glue bead 4 and the rollo glue beads 7 now are interconnected through connecting glue beads 10 which adhere to the glass panel 3. In the illustrated embodiment each of said rollo glue beads 7 is connected to the glass panel glue bead 4 through two connecting glue beads 10, wherein the connections between a rollo glue bead 7 and the corresponding two connecting glue beads 10 are located near to the opposite longitudinal outer ends of a respective guides 5. Specifically, in the illustrated embodiment the roof opening 1 defines two side edges 11 (one of which is illustrated in figure 4) extending in the longitudinal direction of the vehicle, wherein each connecting glue bead 10 connects to a part of the glass glue bead 4 positioned at such a side edge 11.

Preferably a rollo glue bead 7 and a connecting glue bead 10 connected thereto define a single, uniform glue bead manufactured integrally. In figure 4 this has been indicated schematically by using similar hatching for both. The glass glue bead 4 and a connecting glue bead 10 however generally define separate glue beads manufactured separately and joined thereafter, as will be explained later. In figure 4 this has been indicated schematically by using dissimilar hatching for both.

As best seen in figure 4, the stationary roof part 2 and the circumferential edge of the glass panel 3 overlap each other in an overlapping zone. The connecting glue bead 10 extends into said overlapping zone, as a result of which it will be firmly secured between the glass panel 3 and stationary roof part 2 (specifically, in this case, the side edges 11 thereof).

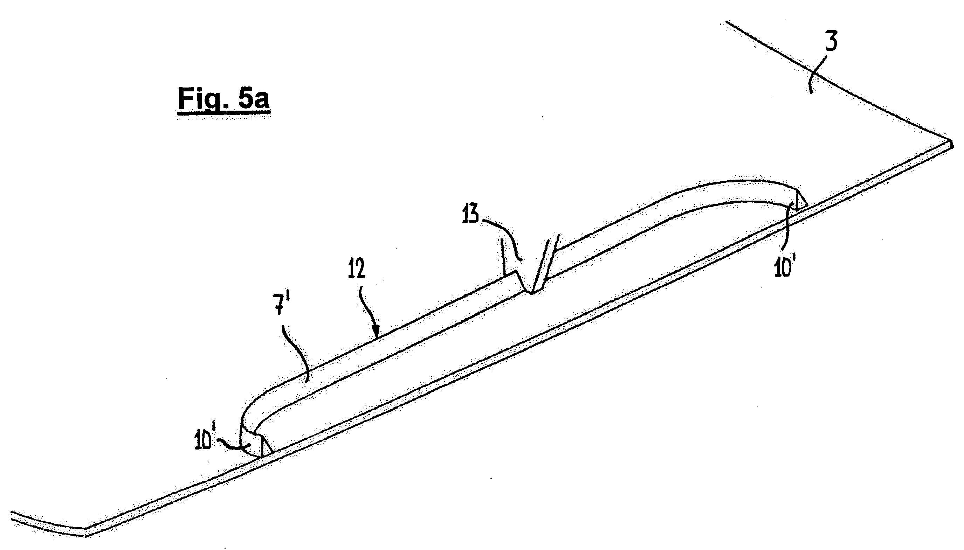

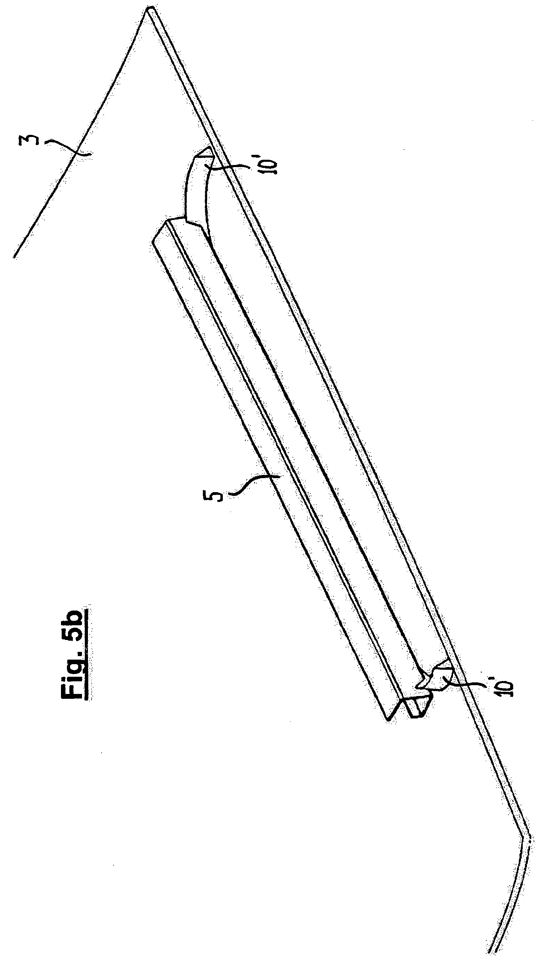

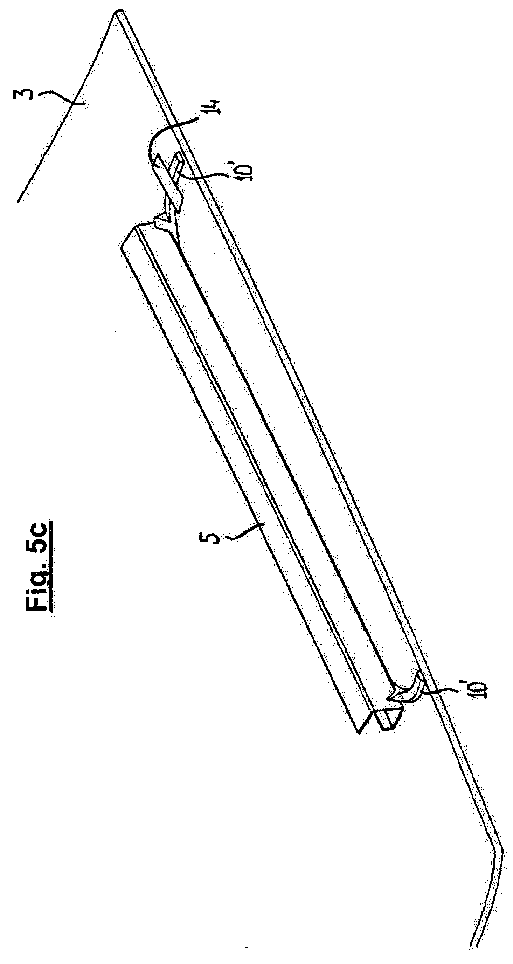

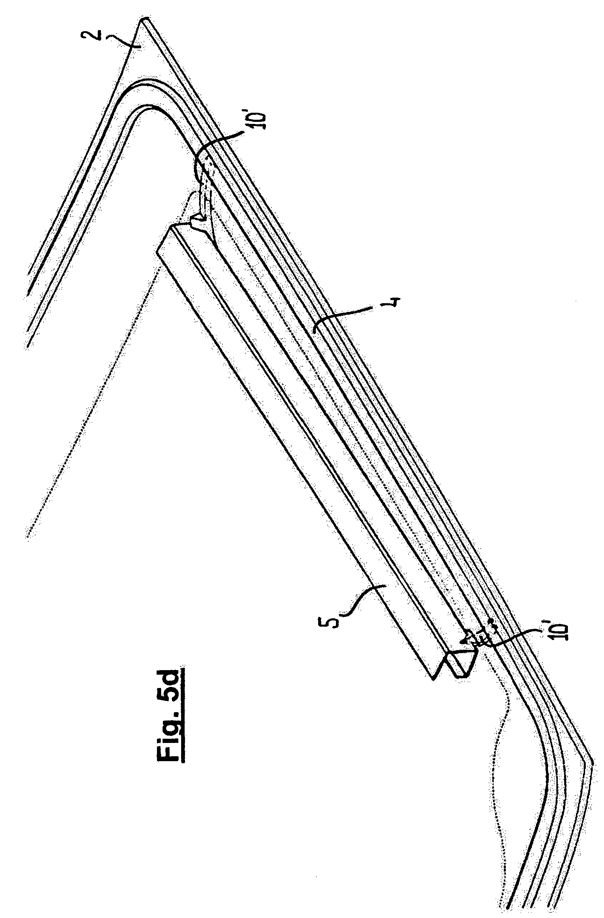

Finally referring to figure 5, four consecutive steps of a method for manufacturing a roof construction for a vehicle (of the type comprising a roof opening surrounded by a stationary roof part, a glass panel covering said roof opening and having a circumferential edge connected to the stationary roof part through at least one glass panel glue bead, and a rollo assembly which is attached to the glass panel through at least one rollo glue bead) are illustrated.

A first step (figure 5a) comprises applying a glue bead 12 to the glass panel 3. Said glue bead 12 is an integral combination of a rollo glue bead 7' (at the intended position of the part 5 of the rollo assembly which, using said rollo glue bead 7', has to be attached to the glass panel 3) and two connecting glue beads 10' which extend to the intended position of the glass glue bead 4 which will be applied later. Applying this combined glue bead may be carried out by a nozzle 13. The combined glue bead 7',10' originally has a height H₁ as shown in figure 4.

As a next step (figure 5b) the rollo assembly (or, specifically in the present case, the guide 5) is attached to the glass panel 3 by bringing it into contact with said part of the glue bead which acts as rollo glue bead 7'. During such a step the rollo glue bead 7' is compressed to a height H₂ as indicated in figure 4.

As a next step (figure 5c) the height of the connecting glue bead 10' is partly reduced. This may be carried out before the glue bead is cured, by means of any appropriate means 14 (such as a pressing member or a scraping member or even by a manipulation or specific operation of the nozzle 13, in which case such a height reduction will occur at the same time as applying the glue bead). The resulting height is H₄ (see figure 4). It is also possible to carry out such a height reduction after (partially) curing the glue bead, in which case the means 14 may comprise a cutting member.

Such a part with reduced height will be located at the intended overlapping zone between the stationary roof part 2 and the circumferential edge of the glass panel 3 and generally will correspond with the location where the glass panel 3 using the glass panel glue bead 4 will be attached to the stationary roof part 2.

When the glue bead has been cured, as a final step (figure 5d) the glass glue bead 4 is applied (to the glass panel 3 or to the stationary roof part 2) and is used for connecting the circumferential edge of the glass panel 3 with the stationary roof part 2, such that at the end of the final step the glass glue bead 4 and the connecting glue bead 10' are interconnected. The combined height of the connecting glue bead 10' with reduced height H₄ and the glass panel glue bead 4 positioned on top of it is H₃ and this height corresponds with the required distance between the glass panel 3 and stationary roof 2 at such a location. If the height reduction would not be carried out, the height of the combined glue beads would be too large.

As shortly indicated above, the final step may comprise applying the glass glue bead 4 to the stationary roof part 2, followed by bringing the glass panel 3 and the connecting glue bead 10' thereon into contact with the glass glue bead 4, or applying the glass glue bead 4 to the glass panel 3 and into contact with the connecting glue bead 10', followed by bringing the glass glue bead 4 into contact with the stationary roof part 2 and thus connecting latter with the glass panel 3.

The invention is not limited to the embodiments described before, which may be varied widely within the scope of the invention as defined by the appending claims.

## Claims

1. Roof construction for a vehicle, comprising a roof opening (1) surrounded by a stationary roof part (2), a glass panel (3) covering said roof opening and having a circumferential edge which is connected to the stationary roof part through at least one glass panel glue bead (4), and further comprising a rollo assembly (5,6,8,9) which is attached to the glass panel through at least one rollo glue bead (7), **characterized in that** the glass panel glue bead (4) and the rollo glue bead (7) are interconnected through at least one connecting glue bead (10) which adheres to the glass panel (3).

2. Roof construction according to claim 1, wherein the rollo assembly (5,6,8,9) comprises two spaced rollo screen guides (5) each attached to the glass panel (3) through a rollo glue bead (7), wherein each of said rollo glue beads (7) is connected to the glass panel glue bead (4) through at least one connecting glue bead (10).

3. Roof construction according to claim 2, wherein each of said rollo glue beads (7) is connected to the glass panel glue bead (4) through two connecting glue beads (10).

4. Roof construction according to claim 3, wherein the connections between a rollo glue bead (7) and the corresponding two connecting glue beads (10) are located near to the opposite longitudinal outer ends of a respective guide (5).

5. Roof construction according to any of the claims 2-4, wherein the roof opening (1) defines two side edges (11) extending in the longitudinal direction of the vehicle and wherein each connecting glue bead (10) connects to a part of the glass glue bead (4) positioned at such a side edge (11).

6. Roof construction according to any of the previous claims, wherein a rollo glue bead (7) and a connecting glue bead (10) connected thereto define a single, uniform glue bead manufactured integrally, whereas the glass glue bead (4) and a connecting glue bead (10) are separate glue beads manufactured separately and joined thereafter.

7. Roof construction according to any of the previous claims, wherein the stationary roof part (2) and the circumferential edge of the glass panel (3) overlap each other in an overlapping zone and wherein the connecting glue bead (10) extends into said overlapping zone.

8. Method for manufacturing a roof construction for a vehicle of the type comprising a roof opening (1) surrounded by a stationary roof part (2), a glass panel (3) covering said roof opening and having a circumferential edge connected to the stationary roof part through at least one glass panel glue bead (4), and a rollo assembly (5,6,8,9) which is attached to the glass panel (3) through at least one rollo glue bead (7'), **characterized in that** the method comprises the steps of applying a glue bead (7',10') to the glass panel (3) at the intended position of the rollo glue bead (7'), which glue bead is integrally continued to the intended position of the glass glue bead (4), followed by the step of attaching the rollo assembly (5,6,8,9) to the glass panel (3) by bringing it into contact with a part (7') of said glue bead which than acts as rollo glue bead, next a step of curing the glue bead and the final step of applying the glass glue bead (4) and connecting the circumferential edge of the glass panel (3) with the stationary roof part (2) through said glass glue bead (4), such that at the end of the final step the glass glue bead (4) and the glue bead (7',10') are interconnected.

9. Method according to claim 8, wherein the final step comprises applying the glass glue bead (4) to the stationary roof part (2), followed by bringing the glass panel (3) and the glue bead (10') thereon into contact with the glass glue bead (4).

10. Method according to claim 8, wherein the final step comprises applying the glass glue bead (4) to the glass panel (3) and into contact with the glue bead (10'), followed by bringing the glass glue bead (4) into contact with the stationary roof part (2).

11. Method according to any of the claims 8-10 for manufacturing a roof construction in which the stationary roof part (2) and the circumferential edge of the glass panel (3) overlap each other in an overlapping zone and wherein the glue bead (10') extends into the overlapping zone, wherein before starting the final step the height of the part of the glue bead (10') intended to extend into the overlapping zone, is reduced.

12. Method according to claim 11, wherein the height of said glue bead part is reduced previous to curing the glue bead by deformation of the glue bead.

13. Method according to claim 12, wherein the deformation of the glue bead is carried out by flattening and spreading out the glue bead by mechanical means (14), such as by a pressing member or a scraping member.

14. Method according to claim 11, wherein the height of said glue bead part is reduced after at least partially curing the glue bead, by removal of part of the glue bead.

15. Method according to claim 14, wherein the removal of part of the glue bead is carried out by a cutting member (14).

## Patentansprüche

1. Dachkonstruktion für ein Fahrzeug, aufweisend eine Dachöffnung (1), die von einem stationären Dachteil (2) umgeben ist, ein Glaspaneel (3), welches die Dachöffnung abdeckt und welches einen Umfangsrand hat, der mit dem stationären Dachteil verbunden ist durch wenigstens einen Glaspaneelkleberwulst (4), und ferner aufweisend eine Rolloeinrichtung (5,6,8,9), welche an dem Glaspaneel angebracht ist durch wenigstens einen Rollokleberwulst (7), **dadurch gekennzeichnet, dass** der Glaspaneelkleberwulst (4) und der Rollokleberwulst (7) miteinander verbunden sind durch wenigstens einen Verbindungskleberwulst (10), der an dem Glaspaneel (3) anhaftet.

2. Dachkonstruktion gemäß Anspruch 1, wobei die Rolloeinrichtung (5,6,8,9) aufweist zwei im Abstand angeordnete Rolloschirmführungen (5), die jeweils an dem Glaspaneel (3) angebracht sind durch einen Rollokleberwulst (7), wobei jeder der Rollokleberwulste (7) mit dem Glaspaneelkleberwulst (4) verbunden ist durch wenigstens einen Verbindungskleberwulst (10).

3. Dachkonstruktion gemäß Anspruch 2, wobei jeder von den Rollokleberwulsten (7) mit dem Glaspaneelkleberwulst (4) verbunden ist durch zwei Verbindungskleberwulste (10).

4. Dachkonstruktion gemäß Anspruch 3, wobei die Verbindungen zwischen einem Rollokleberwulst (7) und den korrespondierenden zwei Verbindungskleberwulsten (10) nahe zu den entgegengesetzten Längsaußenenden einer jeweiligen Führung (5) angeordnet sind.

5. Dachkonstruktion gemäß irgendeinem der Ansprüche 2-4, wobei die Dachöffnung (1) zwei Seitenränder (11) definiert, die sich in der Längsrichtung des Fahrzeugs erstrecken und wobei jeder Verbindungskleberwulst (10) mit einem Abschnitt des Glaskleberwulsts (4) verbunden ist, der an solch einem Seitenrand (11) positioniert ist.

6. Dachkonstruktion gemäß irgendeinem der vorhergehenden Ansprüche, wobei ein Rollokleberwulst (7) und ein Verbindungskleberwulst (10), der damit verbunden ist, einen einzelnen, einheitlichen Kleberwulst definieren, der integral hergestellt ist, wohingegen der Glaskleberwulst (4) und ein Verbindungskleberwulst (10) separate Kleberwulste sind, die separat hergestellt sind und anschließend miteinander verbunden sind.

7. Dachkonstruktion gemäß irgendeinem der vorhergehenden Ansprüche, wobei der stationäre Dachteil (2) und der Umfangsrand des Glaspaneels (3) einander überlappen in einer Überlappungszone und wobei der Verbindungskleberwulst (10) sich in die Überlappungszone hinein erstreckt.

8. Verfahren zum Herstellen einer Dachkonstruktion für ein Fahrzeug des Typs aufweisend eine Dachöffnung (1), die von einem stationären Dachteil (2) umgeben ist, ein Glaspaneel (3), das die Dachöffnung abdeckt und das einen Umfangsrand hat, der mit dem stationären Dachteil verbunden ist durch wenigstens einen Glaspaneelkleberwulst (4), und eine Rolloeinrichtung (5,6,8,9), die an dem Glaspaneel (3) angebracht ist durch wenigstens einen Rollokleberwulst (7'), **dadurch gekennzeichnet, dass** das Verfahren aufweist die Schritte eines Aufbringens eines Kleberwulsts (7', 10') auf das Glaspaneel (3) an der vorgesehenen Position des Rollokleberwulsts (7'), welcher Kleberwulst integral fortgesetzt wird zu der vorgesehenen Position des Glaskleberwulsts (4), gefolgt von dem Schritt eines Anbringens der Rolloeinrichtung (5,6,8,9) an dem Glaspaneel (3) durch in Kontakt Bringen derselben mit einem Abschnitt (7') des besagten Kleberwulsts, welcher dann als Rollokleberwulst wirkt, als nächstes einen Schritt eines Aushärtens des Kleberwulsts und als letzten Schritt ein Aufbringen des Glaskleberwulsts (4) und ein Verbinden des Umfangsrands des Glaspaneels (3) mit dem stationären Dachteil (2) durch den Glaskleberwulst (4), sodass am Ende des letzten Schritts der Glaskleberwulst (4) und der Kleberwulst (7', 10') miteinander verbunden sind.

9. Verfahren gemäß Anspruch 8, wobei der letzte Schritt aufweist Aufbringen des Glaskleberwulsts (4) auf den stationären Dachteil (2), gefolgt von einem in Kontakt Bringen des Glaspaneels (3) und des Kleberwulsts (10') daran mit dem Glaskleberwulst (4).

10. Verfahren gemäß Anspruch 8, wobei der letzte Schritt aufweist Aufbringen des Glaskleberwulsts (4) auf das Glaspaneel (3) und in Kontakt mit dem Kleberwulst (10'), gefolgt von in Kontakt Bringen des Glaskleberwulsts (4) mit dem stationären Dachteil (2).

11. Verfahren gemäß irgendeinem der Ansprüche 8-10 zur Herstellung einer Dachkonstruktion, bei welcher der stationäre Dachteil (2) und der Umfangsrand des Glaspaneels (3) einander überlappen in einer Überlappungszone, und wobei der Kleberwulst (10') sich in die Überlappungszone hinein erstreckt, wobei vor dem Beginn des letzten Schritts die Höhe des Abschnitts des Kleberwulsts (10'), der vorgesehen ist, um sich in die Überlappungszone hinein zu erstrecken, reduziert wird.

12. Verfahren gemäß Anspruch 11, wobei die Höhe des besagten Kleberwulstabschnitts reduziert wird vor dem Aushärten des Kleberwulsts durch Deformation des Kleberwulsts.

13. Verfahren gemäß Anspruch 12, wobei die Deformation des Kleberwulsts durchgeführt wird durch Abflachen und Ausbreiten des Kleberwulsts durch mechanische Mittel (14), wie z.B. durch ein Drückelement oder ein Schabeelement.

14. Verfahren gemäß Anspruch 11, wobei die Höhe des besagten Kleberwulstabschnitts reduziert wird nach einem wenigstens teilweisen Aushärten des Kleberwulsts durch Entfernen eines Teils des Kleberwulsts.

15. Verfahren gemäß Anspruch 14, wobei das Entfernen des Teils des Kleberwulsts durchgeführt wird durch ein Schneidelement (14).

## Revendications

1. Structure de toit pour un véhicule, comprenant une ouverture de toit (1) entourée par une partie de toit fixe (2), un panneau de verre (3) recouvrant ladite ouverture de toit et ayant un bord circonférentiel qui est raccordé à la partie de toit fixe par le biais d'au moins un cordon de colle de panneau de verre (4), et comprenant en outre un ensemble de joint (5, 6, 8, 9) qui est fixé sur le panneau de verre par le biais d'au moins un cordon de colle de joint (7), **caractérisée en ce que** le cordon de colle de panneau de verre (4) et le cordon de colle de joint (7) sont interconnectés par au moins un cordon de colle de raccordement (10) qui adhère sur le panneau de verre (3).

2. Structure de toit selon la revendication 1, dans laquelle l'ensemble de joint (5, 6, 8, 9) comprend deux guides de joint espacés (5), chacun fixé sur le panneau de verre (3) par le biais d'un cordon de colle de joint (7), dans laquelle chacun desdits cordons de colle de joint (7) est raccordé au cordon de colle de panneau de verre (4) par le biais d'au moins un cordon de colle de raccordement (10).

3. Structure de toit selon la revendication 2, dans laquelle chacun desdits cordons de colle de joint (7) est raccordé au cordon de colle de panneau de verre (4) par le biais de deux cordons de colle de raccordement (10).

4. Structure de toit selon la revendication 3, dans laquelle les raccordements entre un cordon de colle de joint (7) et les deux cordons de colle de raccordement (10) correspondants sont positionnés à proximité des extrémités externes longitudinales opposées d'un guide (5) respectif.

5. Structure de toit selon l'une quelconque des revendications 2 à 4, dans laquelle l'ouverture de toit (1) définit deux bords latéraux (11) s'étendant dans la direction longitudinale du véhicule et dans laquelle chaque cordon de colle de raccordement (10) se raccorde à une partie du cordon de colle de panneau de verre (4) positionnée sur un tel bord latéral (11).

6. Structure de toit selon l'une quelconque des revendications précédentes, dans laquelle un cordon de colle de joint (7) et un cordon de colle de raccordement (10) raccordé à ce dernier définissent un cordon de colle uniforme unique, fabriqué de manière solidaire, alors que le cordon de colle de panneau de verre (4) et le cordon de colle de raccordement (10) sont des cordons de colle séparés, fabriqués séparément et assemblés ultérieurement.

7. Structure de toit selon l'une quelconque des revendications précédentes, dans laquelle la partie de toit fixe (2) et le bord circonférentiel du panneau de verre (3) se chevauchent dans une zone de chevauchement et dans laquelle le cordon de colle de raccordement (10) s'étend dans ladite zone de chevauchement.

8. Procédé pour fabriquer une structure de toit pour un véhicule du type comprenant une ouverture de toit (1) entourée par une partie de toit fixe (2), un panneau de verre (3) recouvrant ladite ouverture de toit et ayant un bord circonférentiel raccordé à la partie de toit fixe par le biais d'au moins un cordon de colle de panneau de verre (4) et un ensemble de joint (5, 6, 8, 9) qui est fixé au panneau de verre (3) par le biais d'au moins un cordon de colle de joint (7'), **caractérisé en ce que** le procédé comprend l'étape consistant à appliquer un cordon de colle (7', 10') sur le panneau de verre (3) dans la position prévue du cordon de colle de joint (7'), lequel cordon de colle est intégralement continu par rapport à la position prévue du cordon de colle de panneau de verre (4), suivie par l'étape consistant à fixer l'ensemble de joint (5, 6, 8, 9) sur le panneau de verre (3) en l'amenant en contact avec une partie (7') dudit cordon de colle qui sert ensuite de cordon de colle de joint, ensuite on assiste à une étape consistant à faire durcir le cordon de colle et à l'étape finale consistant à appliquer le cordon de colle de panneau de verre (4) et raccorder le bord circonférentiel du panneau de verre (3) avec la partie de toit fixe (2) par le biais dudit cordon de colle de panneau de verre (4), de sorte qu'à la fin de l'étape finale, le cordon de colle de panneau de verre (4) et le cordon de colle (7', 10') sont interconnectés.

9. Procédé selon la revendication 8, dans lequel l'étape finale comprend l'étape consistant à appliquer le cordon de colle de panneau de verre (4) sur la partie de toit fixe (2), suivie par l'étape consistant à amener le panneau de verre (3) et le cordon de colle (10') sur ce dernier en contact avec le cordon de colle de panneau de verre (4).

10. Procédé selon la revendication 8, dans lequel l'étape finale comprend l'étape consistant à appliquer le cordon de colle de panneau de verre (4) sur le panneau de verre (3) et en contact avec le cordon de colle (10'), suivi par l'étape consistant à amener le cordon de colle de panneau de verre (4) en contact avec la partie de toit fixe (2).

11. Procédé selon l'une quelconque des revendications 8 à 10 pour fabriquer une structure de toit, dans lequel la partie de toit fixe (2) et le bord circonférentiel du panneau de verre (3) se chevauchent dans une zone de chevauchement et dans lequel le cordon de colle (10') s'étend dans la zone de chevauchement, dans lequel avant de commencer l'étape finale, la hauteur de la partie du cordon de colle (10') prévue pour s'étendre dans la zone de chevauchement, est réduite.

12. Procédé selon la revendication 11, dans lequel la hauteur de ladite partie de cordon de colle est réduite avant l'étape consistant à faire durcir le cordon de colle par déformation du cordon de colle.

13. Procédé selon la revendication 12, dans lequel la déformation du cordon de colle est réalisée en aplatissant et en étalant le cordon de colle avec des moyens mécaniques (14), tel qu'un élément de pression ou un élément de raclage.

14. Procédé selon la revendication 11, dans lequel la hauteur de ladite partie de cordon de colle est réduite après avoir au moins partiellement durci le cordon de colle, en retirant une partie du cordon de colle.

15. Procédé selon la revendication 14, dans lequel le retrait d'une partie du cordon de colle est réalisé avec un élément de coupe (14).
